# EUROPEAN PATENT SPECIFICATION

(11) **EP 4 015 375 B1**
(45) Date of publication and mention of the grant of the patent: **01.03.2023**
(21) Application number: 20216228.5
(22) Date of filing: 21.12.2020
(51) Int. Cl.: B64C 27/00, B64C 29/00, B64D 43/00, B64D 45/00, G01C 23/00

(54) **INDICATOR FOR AN AIRCRAFT CAPABLE OF HOVERING AND METHOD FOR ASSISTING PERFORMING A MANOEUVRE FOR THE AFORESAID AIRCRAFT**
INDIKATOR FÜR EIN SCHWEBEFÄHIGES FLUGZEUG UND VERFAHREN ZUR UNTERSTÜTZUNG DER DURCHFÜHRUNG EINES MANÖVERS FÜR DIESES FLUGZEUG
INDICATEUR POUR UN AÉRONEF CAPABLE DE VOL STATIONNAIRE ET PROCÉDÉ POUR EFFECTUER UNE MANOEUVRE D'AIDE DUDIT AÉRONEF

(43) Date of publication of application: 22.06.2022
(73) Proprietor: LEONARDO S.p.A., 00195 Roma (IT)
(72) Inventor: TAUMATURGO, Vincenzo, 21017 SAMARATE (VA) (IT); ABDEL NOUR, Pierre, 21017 SAMARATE (VA) (IT); PICCOLINI, Isidoro, 21017 SAMARATE (VA) (IT); BRENA, Clemente, 21017 SAMARATE (VA) (IT); GOBBI, Simone, 21017 SAMARATE (VA) (IT); CITO, Gianfranco, 21017 SAMARATE (VA) (IT)
(74) Representative: Di Sciuva, Michele

(56) References cited:
- EP-A1- 3 477 261
- CN-A- 110 901 897
- FR-A1- 2 921 635
- US-A1- 2016 288 922

## Description

The present invention relates to an indicator for an aircraft that is capable of hovering.

In particular, the present invention relates to an indicator for a helicopter, a tilt-rotor aircraft or a helicoplane.

The present invention further relates to a method for assisting performing a manoeuvre for the aforesaid aircraft capable of hovering.

Helicopters comprise, as known, a motor system, a main rotor actuated by the motor system and adapted to provide the lift required to sustain the helicopter and the thrust required for the directional control of the helicopter.

Tilt-rotor aircrafts comprise, as known:
- a fuselage extended along a first longitudinal axis;
- a fixed wing extended along a second transversal axis of the tilt-rotor aircraft and tilted with respect to the first longitudinal axis; and
- a pair of rotors rotatable about respective third axes and which can be tilted with respect to the second axis.

The tilt-rotor aircraft can be switched between:
- an airplane configuration, wherein the rotors have the respective third axes parallel to the first axis; and
- a helicopter configuration, wherein the rotors have the respective third rotation axes tilted with respect to the first axis.

In the airplane configuration, the rotors behave as the traditional propellers of an airplane and generate the thrust required to sustain the airplane itself. In such a configuration, the lift required to sustain the airplane is provided by the fixed wing.

In the helicopter configuration, the rotors provide both the lift required to sustain it and the thrust required to manoeuvre the tilt-rotor aircraft along the aforesaid first and second axes.

Referring to helicopters and tilt-rotor aircrafts arranged in the helicopter configuration, the actuation of the rotor causes, as known, a vertical air flow through the rotor.

In normal operative conditions, the actuation of the rotor generates a lift causing a vertical air flow from the top downwards through the rotor itself.

A portion of such air flow re-circulates upwards near the free ends of the blades joining to the vertical air flow from the top downwards.

More precisely, such portion of air flow generates end vortices which generate aerodynamic drag and degrade the aerodynamic efficiency of the blades. Still in greater detail, at the end of each rotor a vortex is formed, called in fact, end vortex having a toroidal shape.

As long as such end vortices remain below a certain size, the overall efficiency loss of the rotor remains small.

However, while the helicopter/tilt-rotor aircraft arranged in the helicopter configuration is in the descent condition, the aircraft crosses the aforesaid downward flow, causing an increase in the size of end vortices.

This leads to a condition known as "Vortex Ring State", wherein the rotor power is only used to supply a toroidal-shaped air circulation about the rotor.

In case the rate of descent exceeds a threshold value, the previously described phenomena are intensified and a turbulent flow is generated on a relevant area of the rotor. The aerodynamic efficiency of the rotor is thus heavily reduced even though the motor system keeps on providing power to the rotor.

In such conditions the helicopter/tilt-rotor aircraft becomes unstable and undergoes strong oscillations, for instance pitch and/or roll oscillations.

The Vortex Ring State condition is generated in case the rate of descent of the helicopter/tilt-rotor aircraft arranged in the helicopter configuration is higher than a first threshold value, typical of the aircraft, only a percentage of the motor power is used and the translation forward speed is lower than a second threshold value.

Manoeuvres which are typically likely to generate a Vortex Ring State condition are hovering manoeuvres at hight altitudes with no precise altitude control and landing manoeuvres with significantly high rates of descent.

Patent Application EP-A-1620311 discloses a method for identifying the Vortex Ring State condition and for automatically overcoming such condition.

Patent Applications US-B-9,037,316; EP-B-2212296; EP-B-3263452 and EP-3406562 disclose methods for identifying the Vortex Ring condition and signalling such condition to the aircraft crew.

It is perceived in the field the need to signal, in a way that is concise and immediately clear to the crew, that the aircraft is approaching a Vortex Ring State condition or is in the aforesaid condition.

US-A-2016/288922 discloses an aircraft capable of hovering according to the preamble of claim 1 and a method for assisting performing a manoeuvre by an aircraft according to the preamble of claim 3.

CN-A-110901897 discloses an early-warning separation control method for the vortex ring state of an unmanned helicopter, which truly realizes vortex ring early-warning and advanced protection functions, provides a solution for quick and reasonable separation even if the vortex ring state is entered, and guarantees the flight safety of the unmanned helicopter. According to the early-warning separation control method for the vortex ring state of the unmanned helicopter, the current safety state of the unmanned helicopter can be judged in real time, the state information is sent to the control endto be prompted to an operator for early warning, meanwhile, the early-warning separation control method is stable, reliable and high in early-warning precision, and the flight safety of the unmanned helicopter is greatly improved.EP-A-3477261 discloses flight instrument warnings that are configured to automatically adjust a low airspeed warning band on an airspeed indicator based on available torque margin and radar altimeter height. Warnings may be presented on a primary flight display or on flight instruments when a low airspeed band is entered.

The object of the present invention is to realise an aircraft capable of hovering, which allows to meet at least one of the needs specified above in a simple and economical way.

According to the invention, this object is achieved by an aircraft capable of hovering as claimed in claim 1.

The present invention also relates to a method for assisting performing a manoeuvre by an aircraft configured to be capable of hovering as claimed in claim 3.

Further features and advantages of the present invention will become apparent from the detailed description that follows, provided by way of non-limiting example and with reference to the accompanying drawings, wherein:
- Figures 1 to 3 show a side view of an aircraft comprising an indicator according to the present invention;
- Figure 4 shows the indicator made according to the present invention;
- Figures 5 and 6 show a further indicator of the aircraft of Figures 1 to 3 on which visual signals output by a control unit of the aircraft of Figures 1 to 3 are displayed;
- Figure 7 shows some components of an aircraft cockpit of Figures 1 to 3, highlighting the position of the indicators illustrated in Figures 4, 5 and 6;
- Figure 8 shows a plurality of flight envelopes stored in a storage step of the control unit; and

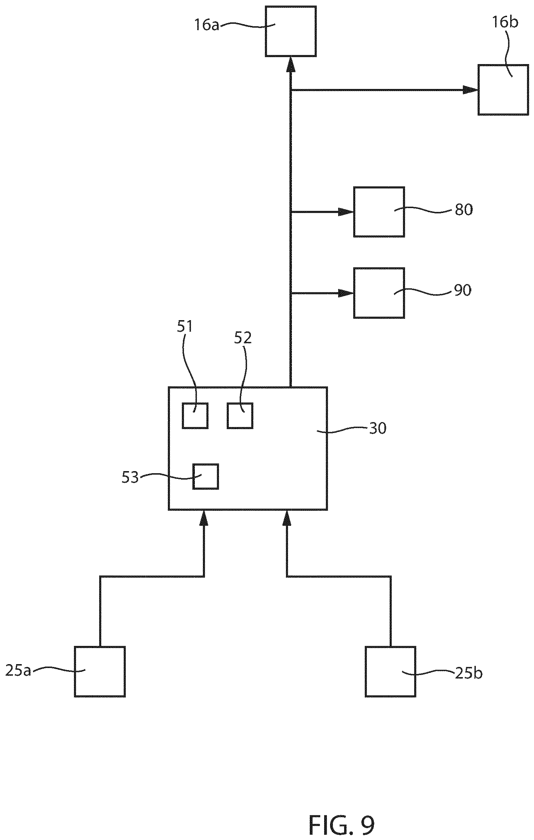

- Figure 9 shows schematically further components of the aircraft of Figures 1 to 3.

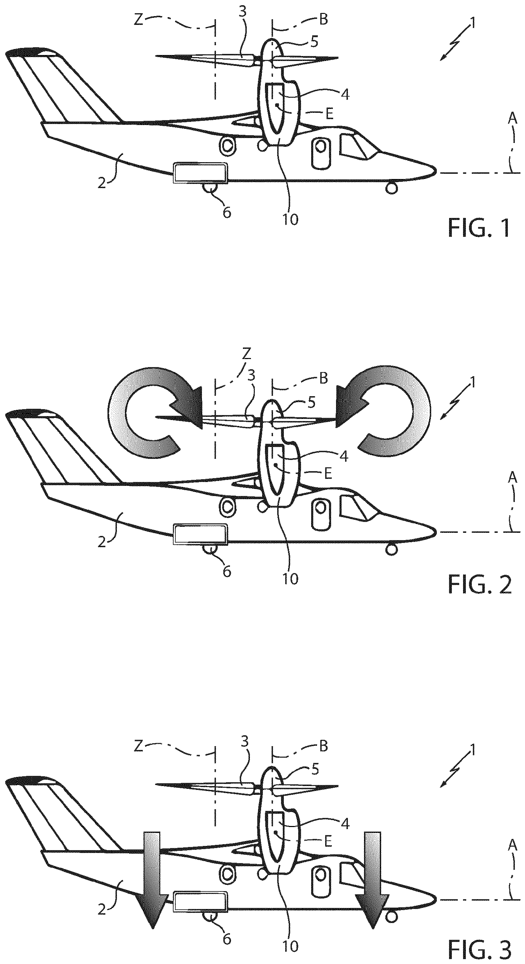

With reference to the attached Figures 1 to 3, 1 denotes an aircraft capable of hovering, that is, capable of keeping flying at constant height and at zero speed.

The aircraft 1 is, in the case illustrated, a tilt-rotor aircraft.

In alternative, the aircraft 1 may be a helicopter or a helicoplane.

It must be specified that in the following present disclosure, expressions such as "upper", "lower", "at the front", "at the back" and the like are used referring to forward flight conditions or "hovering" of the tilt-rotor aircraft 1 shown in Figures 1 to 3.

The tilt-rotor aircraft 1 essentially comprises:
- a fuselage 2 having an axis A of longitudinal extension;
- a pair of half-wings 3 extending in a cantilever manner from respective parts opposite from each other of the fuselage 2 and transversely to the axis A;
- a pair of motors 4 supported by respective half-wings 3 and arranged, each, at the intersection zone of the relative half-wing 3 with the fuselage 2; and
- a pair of rotors 5 operatively connected to respective motors 4 and rotatable about respective axes B.

The tilt-rotor aircraft 1 further comprises a pair of nacelles 10 housing respective rotors 5.

The tilt-rotor aircraft 1 further comprises a plurality of carriages 6 arranged below the fuselage 2 with reference to a normal operative position of the tilt-rotor aircraft 1 shown in Figure 2.

The tilt-rotor aircraft comprises a pair of axes E associated to respective half-wings 3. Each axis E is parallel to a median line of the relative half-wing 3 and may have a dihedron with respect to the fuselage 2.

In the case shown, the axis E is orthogonal to axis A and arranged horizontally in a plan view of the tilt-rotor aircraft 1.

Each half-wing 3 develops a lift having a main component along an axis Z orthogonal to axes A, E.

The tilt-rotor aircraft 1 may be selectively arranged, by the tilting of the rotors 5 about the axis E:
- in a "helicopter" configuration (visible in Figure 1), wherein the axes B of the rotors 5 are tilted with respect to axis A and orthogonal to axis E; and
- in an "airplane" configuration (visible in Figures 1 to 3), wherein the axes B of the rotors 5 are parallel to axis A and orthogonal to axis E.

The tilt-rotor aircraft 1 arranged in the "helicopter" configuration and operating at low forward speed and high rate of descent runs the risk of being in a Vortex Ring State condition.

In such condition, the aerodynamic efficiency of the rotors 5 is heavily reduced, generating a risk for the tilt-rotor aircraft 1.

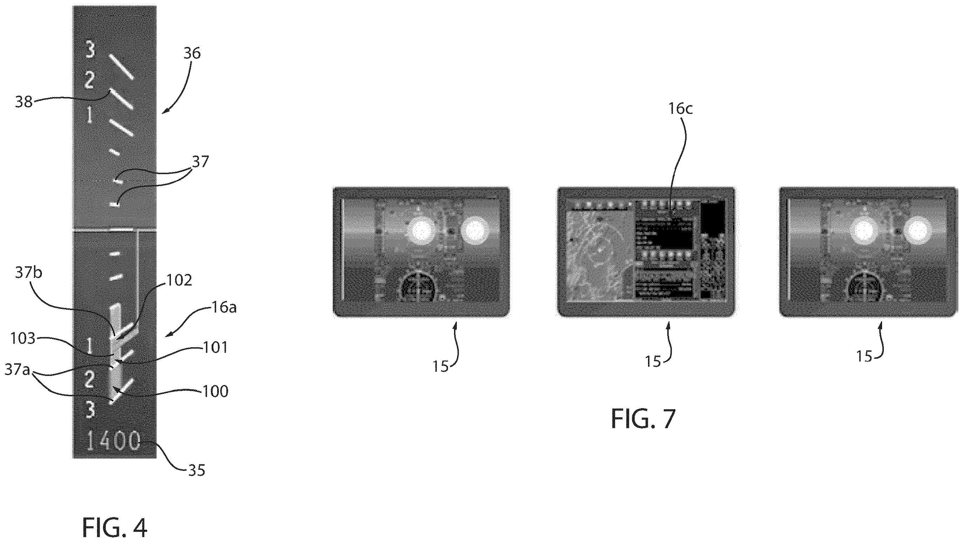

The tilt-rotor aircraft 1 further comprises (Figures 4 to 8):
- a cockpit 15;
- a plurality of indicators 16a, 16b, 16c;
- a plurality of sensors 25a, 25b adapted to detect respective flight parameters; and
- a control unit 30 programmed to receive the flight parameters detected by the sensors 25a, 25b.

In greater detail, the indicator 16a is a vertical speed indicator.

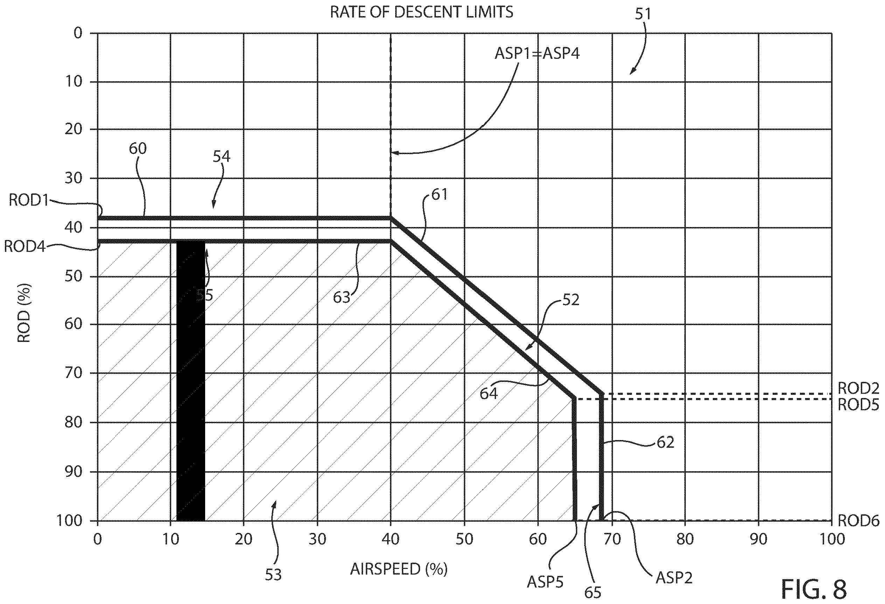

The sensor 25a (shown only schematically in Figure 8) is configured to detect the rate of descent ROD of the tilt-rotor aircraft 1.

The sensor 25b (shown only schematically in Figure 8) is configured to detect the pressure altitude PALT and the airspeed ASP of the tilt-rotor aircraft 1.

The indicator 16b is an instrument known as Attitude and Direction Indicator "ADI".

The indicator 16b integrates the functions of attitude indicator or "artificial horizon", and of "Flight Director" i.e. it provides a representation of the optimal flight trajectory in order to maintain a desired flight path.

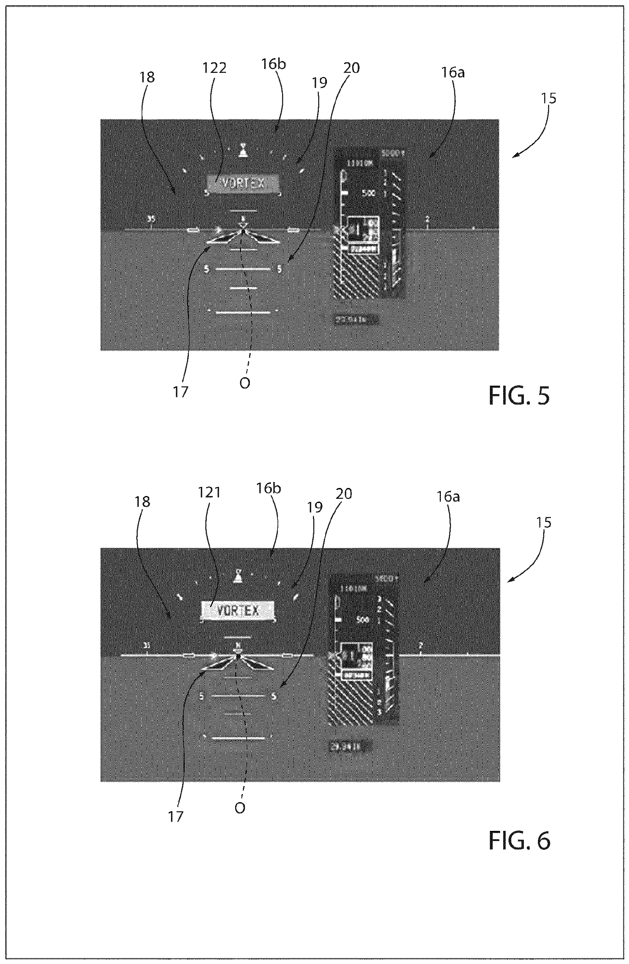

In greater detail, the indicator 16b comprises (Figures 5 and 6):
- an indication 17 representative of the tilt-rotor aircraft 1; and
- a circular area 18 of centre O and rotatable about the centre O with respect to the indication 17, based on the tilt angle of the tilt-rotor aircraft 1 with respect to axis A, i.e. to the roll angle of the tilt-rotor aircraft 1 itself.

The area 18 further comprises:
- an angular graduated scale 19 associated to the angle between the tilt-rotor aircraft 1 axis and a fixed direction, i.e. to the pitch angle; and
- a linear scale 20 associated to the angle between the tilting of the tilt-rotor aircraft 1 with respect to the axis E, i.e. to the roll angle of the tilt-rotor aircraft 1.

The position of the indication 17 on scales 19, 20 represents respective pitch and roll angles of the tilt-rotor aircraft 1.

The control unit 30 is configured to:
- process an inertial vertical speed IVS indicator based on the vertical speed VS and pressure altitude PALT; and
- display such inertial vertical speed IVS value on the indicator 16a.

The indicator 16a comprises in particular, as shown for exemplary purposes in Figure 4:
- an indication 35 of the vertical speed;
- a graduated scale 36 on which a plurality of notches 37 are reported that are associated to respective values of vertical speed; and
- a needle 38 moving on the graduated scale 36 so as to be overlapped to the notch 37 corresponding to the respective simultaneous value of vertical speed of the tilt-rotor aircraft 1.

The control unit 30 further comprises a storing step 50 wherein pairs of values of rate of descent ROD and airspeed ASP are stored.

In greater detail, within the data storing step 50 they are stored:
- first pairs of values of rate of descent ROD and airspeed ASP corresponding to a safe flight envelope 51 of the tilt-rotor aircraft 1;
- second pairs of values of rate of descent ROD and airspeed ASP corresponding to a flight envelope 52 wherein the tilt-rotor aircraft 1 is approaching a Vortex Ring State condition; and
- third pairs of values of rate of descent ROD and airspeed ASP corresponding to a flight envelope 53 wherein the tilt-rotor aircraft 1 is in a Vortex Ring State condition.

Within the storing step 50 they are stored:
- fourth pairs of values of rate of descent ROD and airspeed ASP corresponding to a boundary broken line 54 between flight envelopes 51, 52; and
- fifth pairs of values of rate of descent ROD and airspeed ASP corresponding to a boundary broken line 55 between flight envelopes 52, 53.

The broken line 54 comprises, in particular:
- a segment 60 corresponding to constant values ROD1 of the rate of descent ROD and to increasing values of the airspeed ASP comprised between zero and ASP1;
- a segment 61 corresponding to increasing values of the rate of descent ROD comprised between ROD1 and ROD2, and increasing values of the airspeed ASP comprised between ASP1 and ASP2; and
- a segment 62 corresponding to increasing values of the rate of descent ROD comprised between ROD2 and ROD6, and constant values of the airspeed ASP equal to ASP2.

The broken line 55 comprises, in particular:
- a segment 63 corresponding to constant values ROD4 of the rate of descent ROD and to increasing values of the airspeed ASP comprised between zero and ASP4;
- a segment 64 corresponding to increasing values of the rate of descent ROD comprised between ROD4 and ROD5, and decreasing values of the airspeed ASP comprised between ASP4 and ASP5; and
- a segment 65 corresponding to increasing values of the rate of descent ROD comprised between ROD5 and ROD6, and constant values of the airspeed ASP equal to ASP5.

In particular the values ASP1 and ASP4 are each other equal and value ASP2 is greater than value ASP5.

Value ROD6 (ROD3) is greater than value ROD5 (ROD2), which is in turn greater than value ROD 4 (ROD1).

Value ROD6 (ROD5, ROD4) is greater than value ROD 3 (ROD2, ROD1).

The segments 60, 61, 62; 63, 64, 65 are in the case shown conformed as segments of a straight line.

The segments 60, 63; 61, 64; 62, 65 are each other parallel.

The indicator 16a comprises (Figure 4) an area 100 wherein an indication 101 associated to the tilt-rotor aircraft 1 approaching the Vortex Ring State condition can be displayed.

The indicator 16a further comprises an area 102 wherein an indication 103 associated to the fact that the tilt-rotor aircraft 1 is in the Vortex Ring State condition can be displayed.

In greater detail, the indications 101, 103 are overlapped to the graduated scale 36.

Still more precisely, the indication 101 is overlapped to respective notches 37a corresponding to first values of rate of descent of the graduated scale 36, and the indication 103 is overlapped to respective notches 37b corresponding to values of the second rate of descent of the graduated scale 36.

The aforesaid second values are greater as an absolute value than the first values.

In particular, the indication 103 is displayed in a first colour, which is yellow according to the invention.

The indication 101 is displayed by a second colour, which is red according to the invention.

The control unit 30 is programmed to command, based on the flight parameters detected by the sensors 25a, 25b, displaying the indications 101, 103 on the indicator 16a.

The tilt-rotor aircraft 1 further comprises:
- a generator 80 of visual signals inside the cockpit 15 and in a position other than the indicator 6a.
- a generator 90 of acoustic signals.

The generator 80 is commanded by the control unit 30 based on the flight parameters detected by the sensors 25a, 25b to generate (Figures 5 and 6):
- a first visual signal 121 (Figure 6), when the tilt-rotor aircraft 1 is in the flight envelope 52 and is approaching the Vortex Ring State condition; and
- a second visual signal 122 (Figure 5), when the tilt-rotor aircraft 1 is in the flight envelope 53 and is in the Vortex Ring State condition.

In particular, the first and second visual signals 121, 122 are respectively reproduced in a first colour - yellow according to the invention
- and in a second colour - red according to the invention
- different from the first colour.

The first and second visual signals 121, 122 have a rectangular shape and are displayed in the same area inside the area 18 of the indicator 16b.

In particular, the visual signals 121, 122 are displayed as blinking for a predefined time range, such as 5 seconds.

The generator 90 is commanded by the control unit 30 based on the flight parameters detected by the sensors 25a, 25b to generate:
- a first acoustic signal, when the tilt-rotor aircraft 1 is in the flight envelope 51 and is approaching the Vortex Ring State condition; and
- a second acoustic signal, when the tilt-rotor aircraft 1 is in the flight envelope 52 and is in the Vortex Ring State condition.

In the case shown, the first and second acoustic signals are obtained by voice synthesis respectively of "Sink Rate" and "Vortex vortex" messages.

The control unit 30 can be connected to an autopilot system in order to perform an automatic emergency manoeuvre in case the tilt-rotor aircraft 1 is in the flight envelopes 52, 53.

The operation of the tilt-rotor aircraft 1 is hereinafter disclosed with reference to a condition wherein the tilt-rotor aircraft 1 is in the "helicopter" condition.

The indicator 16a indicates to the crew the value of the vertical speed of the tilt-rotor aircraft 1. At the same time, the indicator 16b indicates the attitude of the tilt-rotor aircraft 1 and provides a representation of the optimal flight trajectory so that the tilt-rotor aircraft 1 keeps a desired flight path.

The control unit 30 determines, based on the flight parameters detected by sensors 25a, 25b, if the tilt-rotor aircraft 1 is in the flight envelope 51, 52, 53.

In case the tilt-rotor aircraft 1 is in the flight envelope 51 wherein there is substantially no risk of undergoing the Vortex Ring condition, indications 101, 103 are not displayed, visual signals 121, 122 are not displayed inside the area 18. Furthermore, the first and second acoustic signals are not generated by the generator 90.

In case the tilt-rotor aircraft 1 is in the flight envelope 52 wherein the Vortex Ring condition is approaching, the control unit 30 determines displaying the indication 103 in the area 102 of the indicator 16a and the generator 80 displays the visual signal 122 in yellow colour inside the area 18 of the indicator 16b. The generator 90 further determines displaying the second acoustic signal.

Thereby, the pilot is promptly warned of the fact that the tilt-rotor aircraft 1 is approaching a dangerous condition and can perform the manoeuvre to move away from the Vortex Ring condition.

In case the tilt-rotor aircraft 1 is in the flight envelope 53 wherein the Vortex Ring condition is approaching, the control unit 30 determines displaying the indication 101 in the area 100 of the indicator 16a and the generator 80 displays the visual signal 121 in red colour inside the area 18 of the indicator 16b. The generator 90 further determines displaying the first acoustic signal.

Thereby, the pilot is promptly warned of the fact that the tilt-rotor aircraft 1 is in a dangerous condition and must promptly perform the manoeuvre to move away from the Vortex Ring condition.

After considering the characteristics of the indicator 16a, of the method for assisting performing a manoeuvre for the tilt-rotor aircraft 1 according to the present invention, the advantages it allows to obtain are clear.

In greater detail, the indication 101 associated to the Vortex Ring State condition being reached is displayed in the area 100 of the indicator 16a provided to display the vertical speed of the tilt-rotor aircraft 1 itself.

Similarly, the indication 103 associated to the Vortex Ring State approaching is displayed in the area 102 of the indicator 16a.

Thereby, the indications 101, 103 signal in a way that is concise and immediately clear to the crew that the tilt-rotor aircraft 1 is approaching a Vortex Ring State condition or is in the such condition, enabling the crew to perform the suitable corrective manoeuvre.

By virtue of the fact that the indications 101, 103 are reported on the vertical speed indicator 16a, they are immediately visible to the pilot. In fact, the Vortex Ring State condition preferably occurs in a condition of high vertical speed, i.e. in a condition wherein the crew monitors constantly the indicator 16a.

The visual signals 121, 122 and the first and second acoustic signals further signal to the crew that the tilt-rotor aircraft 1 is respectively in the flight envelopes 52, 53.

It is therefore clear that modifications and variations may be brought to the indicator 16a and method for assisting performing a manoeuvre for the previously disclosed tilt-rotor aircraft 1 without departing from the scope of protection of the present invention.

In particular, the aircraft 1 may not have a crew or may be a drone.

In such case, not according to claim 1, the indicator 16a would be arranged on a remote interface controlled by a user on the ground.

## Claims

1. Aircraft capable of hovering, comprising:
- sensor means (25a, 25b) configured to detect flight parameters of said aircraft (1); and
- an indicator (16a);
said indicator (16a) comprising:
- one first indication (35) associated to the vertical speed of said aircraft (1);
- one first area (100) wherein a second indication (101) can be displayed that is associated to a Vortex Ring State condition being reached; and
- a second area (102) wherein a third indication (103) can be displayed that is associated to a Vortex Ring State condition approaching;
said second indication (101) being overlapped to a first region of the first indication (35) corresponding to first values of a descent vertical speed;
said third indication (103) being overlapped to a second region of said first indication (35) corresponding to second values of said descent vertical speed;
said first values being greater as an absolute value than said second values;
wherein said second indication (101) is displayed, in use, in one first red colour and said third indication (103) is displayed, in use, in a second yellow colour different from said first red colour;
said aircraft (1) further comprising a control unit (30) configured to command, based also on said flight parameters (ROD, PALT; ASP), displaying said second indication (101) on said indicator (16a);
said aircraft (1) further comprising first generating means (90) for generating a first and a second acoustic signal;
said first generating means (90) being commanded by said control unit (30), based also on said flight parameters;
said first acoustic signal being associated to said Vortex Ring State condition being reached;
said second acoustic signal being associated to said Vortex Ring State condition approaching;
**characterized in that** it comprises second generating means (80) configured to display a third and a fourth visual signal;
said third visual signal being associated to said reaching said Vortex Ring State condition and being displayed, in use, in said second red colour;
said fourth visual signal being associated to said Vortex Ring State condition approaching and being displayed, in use, in said first yellow colour;
said aircraft (1) comprising, one further indicator (16b) comprising an area (18) where a fourth indication (17) can be displayed that is associated to the attitude of said aircraft (1);
said third and fourth signals (121, 122) being displayed on said further indicator (16b).

2. Aircraft according to claim 1, **characterised in that** said control unit (30) is configured to command, based also on said flight parameters, displaying said third indication (103) on said indicator (16a).

3. Method for assisting performing a manoeuvre for an aircraft (1) according to claim 1 or 2 and configured to be capable of hovering, comprising the steps of:
i) detecting that said aircraft (1) is in a real Vortex Ring State condition; and
ii) displaying on an indicator (16a) a first indication (35) associated to the value of vertical speed of said aircraft (1);
iii) displaying, on a first area (100) of said indicator (16a), a second indication (101) associated to the real Vortex Ring State condition being reached;
said method further comprising the steps of:
iv) detecting that said aircraft (1) is approaching a real Vortex Ring State condition;
v) displaying, on a second area (102) of said indicator (16a), a third indication (103) associated to the fact that said aircraft (1) is approaching said real Vortex Ring State condition;
vi) overlapping said second indication (101) to a first region of the first indication (35) corresponding to first values of a vertical rate of descent; and
vii) overlapping said third indication (103) to a second region of said first indication (35) corresponding to second values of said vertical rate of descent;
said first values being greater as an absolute value than said second values;
viii) displaying said second indication (101) in a first red colour; and
ix) displaying said third indication (103) in a second yellow colour different from said first colour;
x) generating a first and a second acoustic signal;
said first acoustic signal being associated to said Vortex Ring State condition being reached;
said second acoustic signal being associated to said Vortex Ring State condition approaching;
**characterised in that** it comprises the step xi) of displaying a third and a fourth visual signal (121, 122) on an additional indicator (16b) comprising an area (18) on which a fourth indication (17) can be displayed that is associated to the attitude of said aircraft (1);
said third visual signal (121) being associated to said Vortex Ring State condition being reached and being displayed in said second red colour;
said fourth visual signal (122) being associated to said Vortex Ring State condition approaching and being displayed in said first yellow colour.

4. Method according to claim 3, **characterised in that** it comprises the step xii) of displaying said second and third indication (101, 103) on said indicator (16a).

## Patentansprüche

1. Schwebfähiges Luftfahrzeug, das Folgendes umfasst:
- Sensormittel (25a, 25b), die konfiguriert sind, Flugparameter des Luftfahrzeugs (1) zu detektieren; und
- eine Anzeigeeinrichtung (16a);
wobei die Anzeigeeinrichtung (16a) Folgendes umfasst:
- eine erste Anzeige (35), die der vertikalen Geschwindigkeit des Luftfahrzeugs (1) zugeordnet ist;
- einen ersten Bereich (100), in dem eine zweite Anzeige (101) angezeigt werden kann, die dem Erreichen eines Wirbelringzustands zugeordnet ist; und
- einen zweiten Bereich (102), in dem eine dritte Anzeige (103) angezeigt werden kann, die einer Annäherung an einen Wirbelringzustand zugeordnet ist;
wobei die zweite Anzeige (101) mit einer ersten Zone der ersten Anzeige (35), die ersten Werten einer vertikalen Sinkgeschwindigkeit entspricht, überlappt;
wobei die dritte Anzeige (103) mit einer zweiten Zone der ersten Anzeige (35), die zweiten Werten der vertikalen Sinkgeschwindigkeit entspricht, überlappt;
wobei die ersten Werte als ein Absolutwert größer als die zweiten Werte sind;
wobei die zweite Anzeige (101) im Gebrauch in einer ersten, roten Farbe angezeigt wird und die dritte Anzeige (103) im Gebrauch in einer zweiten, gelben Farbe angezeigt wird, die von der ersten, roten Farbe verschieden ist;
wobei das Luftfahrzeug (1) ferner eine Steuereinheit (30) umfasst, die konfiguriert ist, außerdem auf der Grundlage der Flugparameter (ROD, PALT; ASP) das Anzeigen der zweiten Anzeige (101) auf der Anzeigeeinrichtung (16a) anzuweisen;
wobei das Luftfahrzeug (1) ferner erste Erzeugungsmittel (90) zum Erzeugen eines ersten und eines zweiten akustischen Signals umfasst;
wobei die ersten Erzeugungsmittel (90) außerdem auf der Grundlage der Flugparameter durch die Steuereinheit (30) angewiesen werden;
wobei das erste akustische Signal dem Erreichen des Wirbelringzustands zugeordnet ist;
wobei das zweite akustische Signal der Annäherung an den Wirbelringzustand zugeordnet ist;
**dadurch gekennzeichnet, dass** es zweite Erzeugungsmittel (80) umfasst, die konfiguriert sind, ein drittes und ein viertes visuelles Signal anzuzeigen;
wobei das dritte visuelle Signal dem Erreichen des Wirbelringzustands zugeordnet ist und im Gebrauch in der zweiten, roten Farbe angezeigt wird;
wobei das vierte visuelle Signal der Annäherung an den Wirbelringzustand zugeordnet ist und im Gebrauch in der ersten, gelben Farbe angezeigt wird;
wobei das Luftfahrzeug (1) eine weitere Anzeigeeinrichtung (16b) umfasst, die einen Bereich (18) umfasst, in dem eine vierte Anzeige (17) angezeigt werden kann, die der Höhe des Luftfahrzeugs (1) zugeordnet ist;
wobei das dritte und das vierte Signal (121, 122) auf der weiteren Anzeigeeinrichtung (16b) angezeigt werden.

2. Luftfahrzeug nach Anspruch 1, **dadurch gekennzeichnet, dass** die Steuereinheit (30) konfiguriert ist, außerdem auf der Grundlage der Flugparameter das Anzeigen der dritten Anzeige (103) auf der Anzeigeeinrichtung (16a) anzuweisen.

3. Verfahren zum Unterstützen des Durchführens eines Manövers für ein Luftfahrzeug (1) nach Anspruch 1 oder 2 und das konfiguriert ist, schwebfähig zu sein, das die folgenden Schritte umfasst:
i) Detektieren, dass sich das Luftfahrzeug (1) in einem tatsächlichen Wirbelringzustand befindet; und
ii) Anzeigen einer ersten Anzeige (35), die dem Wert der vertikalen Geschwindigkeit des Luftfahrzeugs (1) zugeordnet ist, auf einer Anzeigeeinrichtung (16a);
iii) Anzeigen einer zweiten Anzeige (101), die dem Erreichen des tatsächlichen Wirbelringzustands zugeordnet ist, auf einem ersten Bereich (100) der Anzeigeeinrichtung (16a);
wobei das Verfahren ferner die folgenden Schritte umfasst:
iv) Detektieren, dass sich das Luftfahrzeug (1) einem realen Wirbelringzustand annähert;
v) Anzeigen einer dritten Anzeige (103), die der Tatsache, dass sich das Luftfahrzeug (1) dem tatsächlichen Wirbelringzustand annähert, zugeordnet ist, auf einem zweiten Bereich (102) der Anzeigeeinrichtung (16a);
vi) Überlappen der zweiten Anzeige (101) mit einer ersten Zone der ersten Anzeige (35), die ersten Werten einer vertikalen Sinkgeschwindigkeit entspricht; und
vii) Überlappen der dritten Anzeige (103) mit einer zweiten Zone der ersten Anzeige (35), die zweiten Werten der vertikalen Sinkgeschwindigkeit entspricht;
wobei die ersten Werte als ein Absolutwert größer als die zweiten Werte sind;
viii) Anzeigen der zweiten Anzeige (101) in einer ersten, roten Farbe; und
ix) Anzeigen der dritten Anzeige (103) in einer zweiten, gelben Farbe, die von der ersten Farbe verschieden ist;
x) Erzeugen eines ersten und eines zweiten akustischen Signals;
wobei das erste akustische Signal dem Erreichen des Wirbelringzustands zugeordnet ist;
wobei das zweite akustische Signal der Annäherung an den Wirbelringzustand zugeordnet ist;
**dadurch gekennzeichnet, dass** es den Schritt xi) des Anzeigens eines dritten und eines vierten visuellen Signals (121, 122) auf einer zusätzlichen Anzeigeeinrichtung (16b), die einen Bereich (18) umfasst, auf dem eine vierte Anzeige (17) angezeigt werden kann, die der Höhe des Luftfahrzeugs (1) zugeordnet ist, umfasst;
wobei das dritte visuelle Signal(121) dem Erreichen des Wirbelringzustands zugeordnet ist und im Gebrauch in der zweiten, roten Farbe angezeigt wird;
wobei das vierte visuelle Signal (122) der Annäherung an den Wirbelringzustand zugeordnet ist und im Gebrauch in der ersten, gelben Farbe angezeigt wird.

4. Verfahren nach Anspruch 3, **dadurch gekennzeichnet, dass** es den Schritt xii) des Anzeigens der zweiten und dritten Anzeige (101, 103) auf der Anzeigeeinrichtung (16a) umfasst.

## Revendications

1. Aéronef capable de vol stationnaire, comprenant :
- des moyens de détection (25a, 25b) configurés pour détecter des paramètres de vol dudit aéronef (1) ; et
- un indicateur (16a) ;
ledit indicateur (16a) comprenant :
- une première indication (35) associée à la vitesse verticale dudit aéronef (1) ;
- une première zone (100) dans lequel une deuxième indication (101) peut être affichée qui est associée à l'atteinte d'une condition d'état d'anneau tourbillonnaire ; et
- une seconde zone (102) dans lequel une troisième indication (103) peut être affichée qui est associée à l'approche d'une condition d'état d'anneau tourbillonnaire ;
ladite deuxième indication (101) étant chevauchée sur une première région de la première indication (35) correspondant à des premières valeurs d'une vitesse verticale de descente ;
ladite troisième indication (103) étant chevauchée sur une seconde région de ladite première indication (35) correspondant à des secondes valeurs de ladite vitesse verticale de descente ;
lesdites premières valeurs étant supérieures en valeur absolue auxdites secondes valeurs ;
dans lequel ladite deuxième indication (101) est affichée, en utilisation, dans une première couleur rouge et ladite troisième indication (103) est affichée, en utilisation, dans une seconde couleur jaune différente de ladite première couleur rouge ;
ledit aéronef (1) comprenant en outre une unité de commande (30) configurée pour commander, sur la base également desdits paramètres de vol (ROD, PALT ; ASP), l'affichage de ladite deuxième indication (101) sur ledit indicateur (16a) ;
ledit aéronef (1) comprenant en outre un premier moyen de génération (90) pour la génération d'un premier et d'un second signal acoustique ;
ledit premier moyen de génération (90) étant commandé par ladite unité de commande (30), sur la base également desdits paramètres de vol ;
ledit premier signal acoustique étant associé à l'atteinte de ladite condition d'état d'anneau tourbillonnaire ;
ledit second signal acoustique étant associé à l'approche de ladite condition d'état d'anneau tourbillonnaire ;
**caractérisé en ce qu'**il comprend un second moyen de génération (80) configuré pour afficher un troisième et un quatrième signal visuel ;
ledit troisième signal visuel étant associé à ladite atteinte de ladite condition d'état d'anneau tourbillonnaire et étant affiché, en utilisation, dans ladite seconde couleur rouge ;
ledit quatrième signal visuel étant associé à l'approche de ladite condition d'état d'anneau tourbillonnaire et étant affiché, en utilisation, dans ladite première couleur jaune ;
ledit aéronef (1) comprenant, un autre indicateur (16b) comprenant une zone (18) où peut être affichée une quatrième indication (17) qui est associée à l'attitude dudit aéronef (1) ;
lesdits troisième et quatrième signaux (121, 122) étant affichés sur ledit autre indicateur (16b).

2. Aéronef selon la revendication 1, **caractérisé en ce que** ladite unité de commande (30) est configurée pour commander, sur la base également desdits paramètres de vol, l'affichage de ladite troisième indication (103) sur ledit indicateur (16a).

3. Méthode d'assistance à la réalisation d'une manœuvre pour un aéronef (1) selon la revendication 1 ou 2 et configuré pour être capable de vol stationnaire, comprenant les étapes consistant à :
i) détecter que ledit aéronef (1) est dans une condition d'état d'anneau tourbillonnaire réelle ; et
ii) afficher sur un indicateur (16a) une première indication (35) associée à la valeur de vitesse verticale dudit aéronef (1) ;
iii) afficher, sur une première zone (100) dudit indicateur (16a), une deuxième indication (101) associée à l'atteinte de la condition d'état d'anneau tourbillonnaire réelle ;
ladite méthode comprenant en outre les étapes consistant à :
iv) détecter que ledit aéronef (1) s'approche d'une condition d'état d'anneau tourbillonnaire réelle ;
v) afficher, sur une seconde zone (102) dudit indicateur (16a), une troisième indication (103) associée au fait que ledit aéronef (1) s'approche de ladite condition d'état d'anneau tourbillonnaire réelle ;
vi) faire chevaucher ladite deuxième indication (101) sur une première région de la première indication (35) correspondant à des premières valeurs d'un taux vertical de descente ; et
vii) faire chevaucher ladite troisième indication (103) sur une seconde région de ladite première indication (35) correspondant à des secondes valeurs dudit taux verticale de descente ;
lesdites premières valeurs étant supérieures en valeur absolue auxdites secondes valeurs ;
viii) afficher ladite deuxième indication (101) dans une première couleur rouge ; et
ix) afficher ladite troisième indication (103) dans une seconde couleur jaune différente de ladite première couleur ;
x) générer un premier et un second signal acoustique ;
ledit premier signal acoustique étant associé à l'atteinte de ladite condition d'état d'anneau tourbillonnaire ;
ledit second signal acoustique étant associé à l'approche de ladite condition d'état d'anneau tourbillonnaire ;
**caractérisée en ce qu'**il comprend l'étape xi) consistant à afficher un troisième et un quatrième signal visuel (121, 122) sur un indicateur supplémentaire (16b) comprenant une zone (18) sur laquelle peut être affichée une quatrième indication (17) qui est associée à l'attitude dudit aéronef (1) ;
ledit troisième signal visuel (121) étant associé à l'atteinte de ladite condition d'état d'anneau tourbillonnaire et étant affiché dans ladite seconde couleur rouge ;
ledit quatrième signal visuel (122) étant associé à l'approche de ladite condition d'état d'anneau tourbillonnaire et étant affiché dans ladite première couleur jaune.

4. Méthode selon la revendication 3, **caractérisée en ce qu'**il comprend l'étape xii) consistant à afficher lesdites deuxième et troisième indications (101, 103) sur ledit indicateur (16a).
